# EUROPEAN PATENT APPLICATION

(11) **EP 3 228 426 A1**
(43) Date of publication of application: **11.10.2017**
(21) Application number: 17164815.7
(22) Date of filing: 04.04.2017
(51) Int. Cl.: B25J 9/16, B25J 13/00, B25J 19/02, B25J 5/00, G10L 15/22

(54) **SYSTEM FOR CONTENT RECOGNITION AND RESPONSE ACTION**

(30) Priority: 04.04.2016 US 201662318160 P; 29.03.2017 US 201715473376
(71) Applicant: Sphero, Inc., Boulder, CO 80301 (US)
(72) Inventor: BLAKELY, John, Boulder, CO Colorado 80301 (US); CARROLL, Jon, Boulder, CO Colorado 80301 (US); EARWOOD, Corey, Boulder, CO Colorado 80301 (US); DORRIS, Brandon, Boulder, CO Colorado 80301 (US); WILLIAMS, Adam, Boulder, CO Colorado 80301 (US); RODES, David, Boulder, CO Colorado 80301 (US)
(74) Representative: Grünecker Patent- und Rechtsanwälte PartG mbB

(57) **Abstract**

A system can use a microphone (130) to detect audio content from a content source (150), and analyze the audio content to determine whether the audio content corresponds to a respective portion of a stored content file. The system can then identify a response action correlated to the respective portion of the content file, and generate control commands to cause a robotic device (100) to perform the response action.

## Description

### CROSS-REFERENCE TO RELATED APPLICATIONS

This application claims the benefit of and claims priority to U.S. Provisional Patent Application No. 62/318,160, filed April 4, 2016 and entitled "SYSTEM FOR CONTENT RECOGNITNION AND RESPONSE ACTION," the disclosure of which is hereby incorporated by reference herein in its entirety.

### BACKGROUND

When users view or interact with content, listen to audio, or both, user experience is typically limited to the outputted content and reactions of friends or other humans participating in the activity. It is with respect to these and other general considerations that the aspects disclosed herein have been made.

### SUMMARY

A system is disclosed that executes an audio response mode to detect and analyze audio content from a content source, and implement audio fingerprinting to determine whether the audio content corresponds to a known or stored audio or content file. Such stored files may be pre-correlated at specified playtimes to response actions that may be performed by a robotic device, and stored in a response log. In response to identifying the audio fingerprint in a stored file, the system may perform a lookup in the response log to determine a response action to be performed by the robotic device. The system may then generate a set of control commands executable by the robotic device in order to cause the robotic device to perform the response action.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Additional aspects, features, and/or advantages of examples will be set forth in part in the description which follows and, in part, will be apparent from the description, or may be learned by practice of the disclosure.

### BRIEF DESCRIPTION OF THE DRAWINGS

The disclosure herein is illustrated by way of example, and not by way of limitation, in the figures of the accompanying drawings and in which like reference numerals refer to similar elements, and in which:
FIG. 1 is a block diagram illustrating an example robotic device implementing audio recognition and response;
FIG. 2 is a block diagram illustrating a mobile computing device implementing a designated application, in accordance with examples described herein;
FIG. 3 is an illustration of an example robotic device, in accordance with examples described herein;
FIG. 4 is an illustration of an example robotic device in the form of a self-propelled device, according to examples described herein; and
FIG. 5 is a flow chart describing an example method of analyzing audio to trigger a response, according to examples described herein.

### DETAILED DESCRIPTION

Various aspects of the disclosure are described more fully below with reference to the accompanying drawings, which form a part hereof, and which show specific exemplary aspects. However, different aspects of the disclosure may be implemented in many different forms and should not be construed as limited to the aspects set forth herein; rather, these aspects are provided so that this disclosure will be thorough and complete, and will fully convey the scope of the aspects to those skilled in the art. Aspects may be practiced as methods, systems or devices. Accordingly, aspects may take the form of a hardware implementation, an entirely software implementation or an implementation combining software and hardware aspects. The following detailed description is, therefore, not to be taken in a limiting sense.

A system is disclosed that executes an audio response mode to detect and analyze audio content from a content source, and implement audio fingerprinting to determine whether the audio content corresponds to a known or stored audio or content file. Such stored files can be pre-correlated at specified playtimes to response actions that can be performed by a robotic device, and stored in a response log. In response to identifying the audio fingerprint in a stored file, the system can perform a lookup in the response log to determine a response action to be performed by the robotic device. The system can then generate a set of control commands executable by the robotic device in order to cause the robotic device to perform the response action.

In one example, the system comprises the robotic device itself. In another example, the system comprises a mobile computing device that transmits the control commands to the robotic device. According to examples described herein, the disclosed system can enable a user to view or listen to outputted content from, for example, a television, a gaming system, or audio system, and a proximate robotic device can interact with the user based on the outputted content. For example, the robotic device can react to certain scenes in a film and/or be triggered perform anthropomorphic reactions, gestures, or responses to the outputted content.

One or more examples described herein provide that methods, techniques, and actions performed by a computing device are performed programmatically, or as a computer-implemented method. Programmatically, as used herein, means through the use of code or computer-executable instructions. These instructions can be stored in one or more memory resources of the computing device. A programmatically performed step may or may not be automatic.

One or more examples described herein can be implemented using programmatic modules or components of a system. A programmatic module or component can include a program, a sub-routine, a portion of a program, or a software component or a hardware component capable of performing one or more stated tasks or functions. As used herein, a module or component can exist on a hardware component independently of other modules or components. Alternatively, a module or component can be a shared element or process of other modules, programs or machines.

Some examples described herein can generally require the use of computing devices, including processing and memory resources. For example, one or more examples described herein can be implemented, in whole or in part, on computing devices such as digital cameras, digital camcorders, desktop computers, cellular or smart phones, personal digital assistants (PDAs), laptop computers, printers, digital picture frames, and tablet devices. Memory, processing, and network resources may all be used in connection with the establishment, use, or performance of any example described herein (including with the performance of any method or with the implementation of any system).

Furthermore, one or more examples described herein may be implemented through the use of instructions that are executable by one or more processors. These instructions may be carried on a computer-readable medium. Machines shown or described with figures below provide examples of processing resources and computer-readable mediums on which instructions for implementing examples can be carried and/or executed. In particular, the numerous machines shown with examples include processor(s) and various forms of memory for holding data and instructions. Examples of computer-readable mediums include permanent memory storage devices, such as hard drives on personal computers or servers. Other examples of computer storage mediums include portable storage units, such as CD or DVD units, flash memory (such as carried on smart phones, multifunctional devices or tablets), and magnetic memory. Computers, terminals, network enabled devices (e.g., mobile devices, such as cell phones) are all examples of machines and devices that utilize processors, memory, and instructions stored on computer-readable mediums. Additionally, examples may be implemented in the form of computer-programs, or a non-transitory computer usable carrier medium capable of carrying such a program.

### SYSTEM DESCRIPTION

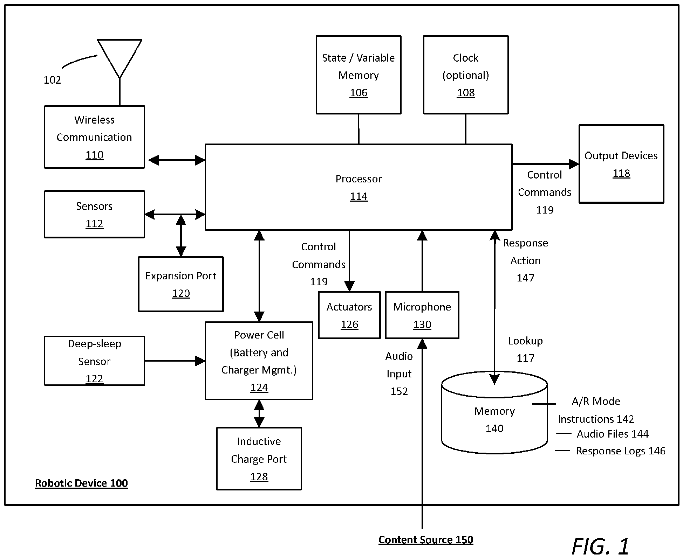

FIG. 1 is a block diagram illustrating an example robotic device implementing audio recognition and response. The robotic device 100 can be operated to move under control of another device, such as a computing device operated by a user. The robotic device 100 can be configured with resources that enable one or more of the following: (i) maintain self-awareness of orientation and/or position relative to an initial reference frame after the device initiates movement; (ii) process control input programmatically, so as to enable a diverse range of program-specific responses to different control inputs; (iii) enable another device to control its movement using software or programming logic that is communicative with programming logic on the self-propelled device; and/or (iv) generate an output response for its movement and state that it is software interpretable by the control device.

The robotic device 100 can include a processor 114 which can execute programmatic instructions from a program memory 140. The instructions stored in the program memory 140 can be changed, for example to add features, correct flaws, or modify behavior. In some variations, the program memory 140 stores programming instructions that are communicative or otherwise operable with software executing on a linked controller device. The processor 114 is configured to execute different programs of programming instructions, in order to alter the manner in which the robotic device 100 interprets or otherwise responds to command input ("commands") from different sources. As described herein, the robotic device 100 may have multiple modes of operation, including the robotic device 100 being controlled by a computing device providing commands, the robotic device 100 being a controller for another device, and/or the robotic device 100 being partially or wholly self-controlled.

In some examples, the robotic device 100 can share a computing platform with a computing device on which programming logic is shared, in order to: (i) enable the user to operate the computing device to generate multiple kinds of input, including simple directional input, command input, gesture input, motion or other sensory input, voice input or combinations thereof to operate the robotic device 100; (ii) enable the robotic device 100 to interpret input received from the computing device as a command or set of commands; and/or (iii) enable the robotic device 100 to communicate data regarding the self-propelled device's position, movement, and/or state in order to effect a state on the computing device (e.g., a display state to include content corresponding to a controller-user interface). In variations, the robotic device 100 can further provide a programmatic interface (e.g., on a display) that facilitates additional programming logic and/or instructions to operate the robotic device 100. The computing device can execute programming that is communicative with the programming logic on the robotic device 100.

A wireless communication port 110, in conjunction with a communication transducer 102, serves to exchange data between the processor 114 and other external devices. The data exchanges, for example, provide communications, control, logical instructions, state information, and/or updates for the program memory 104. The processor 114 can generate output corresponding to state and/or position information, communicated to the controller device via the wireless communication port 110. The mobility of the robotic device 100 may make wired connections undesirable. Thus, the term "connection" may be understood to mean a logical connection, such as a wireless link (e.g., BLUETOOTH), made without a physical connection to robotic device 100.

In variations, the wireless communication port 110 implements the BLUETOOTH communications protocol and the transducer 102 is an antenna suitable for transmission and reception of BLUETOOTH radio signals. Other wireless communication mediums and protocols may also be used in alternative implementations.

Sensors 112 can provide information about the surrounding environment and condition to the processor 114. In some variations, the sensors 112 include inertial measurement devices, including a three-axis gyroscope, a three-axis accelerometer, and/or a three-axis magnetometer. According to some variations, the sensors 112 provide input to enable the processor 114 to maintain awareness of the device's orientation and/or position relative to an initial reference frame after the device initiates movement. In various examples, the sensors 112 include instruments for detecting light, temperature, humidity, and/or measuring chemical concentrations or radioactivity.

State/variable memory 106 stores information about the present state of the system, including, for example, position, orientation, rates of rotation and translation about each axis. The state/variable memory 106 also stores information corresponding to an initial reference frame of the device upon, for example, the device 100 being put in use (e.g., the device 100 being switched on), as well as position and orientation information once the device 100 is in use. In this way, some examples provide for the device 100 to utilize information of the state/variable memory 106 in order to maintain position and orientation information of the device 100 once the device 100 starts moving.

The robotic device may also include a clock 108 that provides timing information to the processor 114. In one example, the clock 108 provides a time-base for measuring intervals and rates of change. In similar examples, the clock 108 provides day, date, year, time, and alarm functions. The clock 108 can allow the robotic device 100 to provide an alarm or alert at pre-set times.

An expansion port 120 provides a connection for addition of accessories or devices. The expansion port 120 can provide for future expansion, as well as flexibility to add options or enhancements. For example, the expansion port 120 can be used to add peripherals, sensors, processing hardware, storage, displays, or actuators to the basic robotic device 100.

In variations, the expansion port 120 provides an interface capable of communicating with a suitably configured component using analog or digital signals. Thus, the expansion port 120 can provide electrical interfaces and protocols that are standard or well-known. Furthermore, the expansion port 120 implements an optical interface. Example interfaces appropriate for expansion port 120 include the Universal Serial Bus (USB), Inter-Integrated Circuit Bus (I2C), Serial Peripheral Interface (SPI), or ETHERNET.

A display 118 may be included to present information to outside devices or persons. The display 118 can present information in a variety of forms. In variations, display 118 can produce light in colors and patterns, sound, vibration, music, or combinations of sensory stimuli. In one example, the display 118 operates in conjunction with actuators 126 to communicate information by physical movements of device 100. For example, the device 100 can be made to emulate a human head nod or shake to communicate "yes" or "no."

In variations, the display 118 emits light, either in the visible or invisible range. Invisible light in the infrared or ultraviolet range may be useful, for example to send information invisible to human senses but available to specialized detectors. In some examples, the display 118 includes an array of Light Emitting Diodes (LEDs) emitting various light frequencies, arranged such that their relative intensity is variable and the light emitted is blended to form color mixtures.

In variations, the display 118 includes an LED array comprising several LEDs, each emitting a human-visible primary color. The processor 114 can vary the relative intensity of each of the LEDs to produce a wide range of colors. Primary colors of light are those in which a few colors can be blended in different amounts to produce a wide gamut of apparent colors. Many sets of primary colors are known, including for example red/green/blue, red/green/blue/white, and red/green/blue/amber. For example, red, green and blue LEDs together can comprise a usable set of three available primary-color devices comprising the display 118. In other examples, other sets of primary colors and white LEDs can be used. The display 118 can further include an LED used to indicate a reference point on the device 100 for alignment.

The power cell 124 can energy for operating the electronics and electromechanical components of the device 100. In some examples, the power cell 124 is a rechargeable battery. Furthermore, an inductive charge port 128 can allow for recharging the power cell 124 without a wired electrical connection. In variations, the inductive charge port 128 can receive magnetic energy and convert it to electrical energy to recharge the power cell 124. Further, the charge port 128 can provide a wireless communication interface with an external inductive charging device (e.g., an induction charging dock).

A deep sleep sensor 122 can be included to place the robotic device 100 into a very low power or "deep sleep" mode where most of the electronic devices use no battery power. In many aspects, the deep sleep sensor 122 is non-contact in that it senses through the housing of device 100 without a wired connection. The deep sleep sensor 122 may be a Hall Effect sensor mounted so that an external magnet can be applied at a pre-determined location on the robotic device 100 to activate the deep sleep mode.

Actuators 126 may be included to convert electrical energy into mechanical energy for various uses. A primary use of the actuators 126 can be to propel and steer the robotic device 100 over an underlying surface. Movement and steering actuators 126 can be included as a drive system or traction system operable by the processor 114 in accelerating, maneuvering, providing additional motion, expressions, and other movements for the robotic device 100. The drive system (e.g., independent motors and wheels) and other actuators 126 (e.g., joints and/or pivot motors) of the robotic device 100 can be operable under control of the processor 114 executing a set of programmatic instructions stored in memory 140. Furthermore, any number of actuators 126 may be included on the robotic device 100, each of which may be triggered or otherwise controlled by control commands 119 generated by the processor 114.

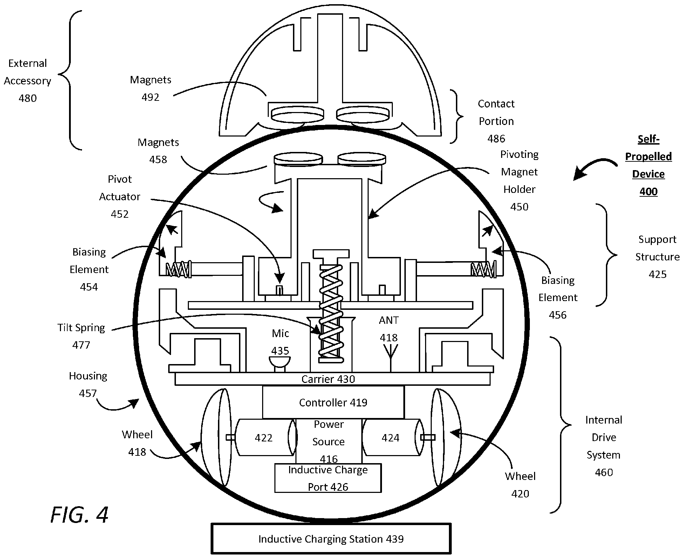

In one example, the robotic device 100 can comprise a self-propelled device that includes a spherical housing and internal drive system comprising two parallel wheels, each mounted to an axle connected to an independently variable-speed motor through a reduction gear system. Additionally, the self-propelled device can include a biasing mechanism (e.g., one or more spring loaded elements that engage with the inner surface of the spherical housing to produce a biasing force that actively forces the wheels against the inner surface to enable drive. Further description of the self-propelled device examples are provided in connection with FIG. 4 below.

In some examples, the actuators 126 can produce a variety of movements in addition to merely rotating and translating the robotic device 100. Thus, in some variations, the actuators 126 cause the device 100 to execute communicative or emotionally evocative movements, including emulation of human gestures, for example, head nodding, shaking, trembling, spinning, or flipping. In some variations, the processor 14 can coordinate the actuators 126 with the output devices 118 (e.g., an audio system and/or display). For example, the processor 114 can provide signals to the actuators 126 and the output devices 118 to cause the robotic device 100 to perform anthropomorphic actions and/or output audio or visual content (e.g., speak to a user). Thus, the device 100 can emit light and/or sound patterns synchronized with movements.

In further variations, the robotic device 100 can be used as a controller for other network-connected devices. The device 100 can contain sensors and wireless communication capability, and so it can perform a controller role for other devices. For example, the robotic device 100 can be held in the hand and used to sense gestures, movements, rotations, combination inputs, and the like.

In some implementations, robotic device 100 is wholly autonomous, meaning the movement of the device 100 is determined from resources that reside on the device 100, either without or independent of input signals from another device acting as a controller. For example, the robotic device 100 can execute audio response mode instructions 142 to initiate an audio response mode. The audio response mode can be triggered via a user input on a connected controller device, or automatically. In one example, the robotic device 100 initiates the audio response mode when the robotic device 100 is placed on an inductive charging dock. In variations, the robotic device 100 can initiate a background listening mode to listen for audio that may match audio fingerprints in a set of audio files 144 stored in the memory 140 or accessible remotely. In such variations, the processor 114 can recognize a particular audio file (e.g., a particular portion of audio from a movie being watched by a user), and initiate the audio response mode to perform lookups 117 in response logs 146 for response actions 147 to certain portions of the audio file 144.

According to examples described herein, the robotic device 100 can include a microphone 130 to monitor audio in the immediate environment of the robotic device 100. The microphone 130 can receive audio inputs 152 from a content source 150, which can be parsed or analyzed by the processor 114. In executing the audio response mode instructions 142 to processor 114 can perform audio fingerprinting to determine information corresponding to the audio input 152, such as a name of a song or film being viewed. Additionally or alternatively, the processor 114 can identify a particular segment or time in the detected audio file 144 that corresponds to the audio input 152, such as a particular scene in a film. Based on the audio fingerprinting, the processor 114 can perform a lookup 117 in the response logs 146 to determine a response action 147 to be performed by the robotic device 100 based on the particular audio file 144, or the current portion of the audio file 144 corresponding to the audio input 152. Once the response action 147 is determined, the processor 114 can generate control commands 119 to cause the robotic device 100 to perform the response action 147, and execute the control commands on the actuators 126 and/or output devices 118.

In various implementations, the robotic device 100 can be proximate to a user when the user is watching a movie or television program, listening to music, or playing a video game. Audio files 144 corresponding to such content can be fingerprinted such that the robotic device 100 can identify particular portions of such content and output a response action 147 based on the content being viewed or listened to. For example, the robotic device 100 can identify a particular scene of a film, and output a response action 147 such that the user can experience the film with the robotic device 100 as if the robotic device 100 were a human or pet companion. Example response actions 147 can include audio actions in which the robotic device 100 speaks to the user or makes certain sounds based on the content, visual actions such as outputting display content such as light flashes, movement actions in which the robotic device 100 performs a set of actions in response to the content, and any combination of the foregoing responses.

Accordingly, as audio content is being outputted by the content source 150 (e.g., a television or audio device), the processor 114 can analyze audio input 152 from the content source 150. Based on the audio fingerprinting, the processor 114 can identify an audio signature corresponding to a particular segment or portion of the content being outputted by the content source 150. For example, the segment can be a scary or exciting scene in a movie, or a portion of a song. Based on the content segment, the processor 114 can execute a corresponding response action 147 comprising a set of actions performed by the robotic device 100 that gives the robotic device 100 the appearance and expression of personality.

The response logs 146 can correlate such content segments to response actions 147 to be performed by the robotic device 100. For example, the robotic device 100 can perform any number of predetermined actions and gestures that can appear as a personality or behavior. The response logs 146 can link particular content segments outputted by the content source 150 with such actions and gestures such that when the processor 114 identifies the audio segment corresponding to a current audio input 152, the processor 114 can readily look up the correlated response action 147 and generate control commands 119 that cause the robotic device 100 to perform that response action 147.

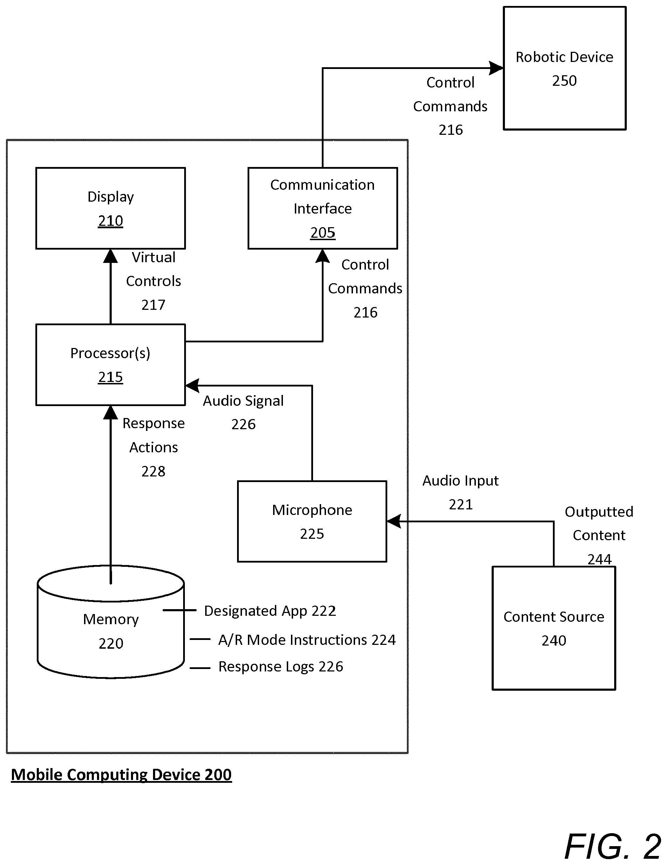

FIG. 2 is a block diagram illustrating a mobile computing device implementing a designated application, in accordance with examples described herein. According to some examples described herein, the mobile computing device 200 can implement certain functions of the audio response mode described above in connection with the robotic device 100 in FIG. 1. Referring to FIG. 2, the mobile computing device 200 can include a number of processors 215 or processing resources, a communication interface 205, and a memory 220 that stores, among other applications and instructions, a designated application 222 for controlling a robotic device 250. In some examples, the processing resources 215 can execute the designated application 222 to enable a user to operate the robotic device 250. For example, upon executing the designated application 222, the processing resources 215 can generate virtual controls 217 on the display 210 to enable the user to provide inputs that can be translated by the processing resources 215 into a set of control commands 216 that can cause the robotic device 250 to perform a set of corresponding actions.

According to certain implementations, the memory 220 can further include audio response mode instructions 224, which can comprise a mode, when executing the designated application 222, that utilizes a microphone 225 of the mobile computing device 200 in order to cause the robotic device 250 to perform response actions to content 244 outputted by a content source 240. Execution of the audio response mode on the mobile computing device 200 can be initiated by, for example, a user input on the designated application 222, a signal received from the robotic device 250 (e.g., when the robotic device 250 is placed on a charging dock), or automatically whenever audio from a content source 240 is detected while the mobile computing device 200 executes the designated application 222.

When initiated, the audio response mode can initiate the microphone 225 to detect audio input 221 from a content source 240, such as a television set or an audio system. The microphone 225 can convert the audio input 221 (e.g., an acoustic signal) into an audio signal 226 (e.g., a digital signal), which can be analyzed by the processing resources 215 based on the audio fingerprinting of an audio file corresponding to the outputted content 244. In analyzing the audio signal 226, the processing resources 215 can identify a particular segment of the outputted content 244 and perform a lookup in response logs 226 for a particular response action 228 corresponding to the content segment. In some examples, the response logs 226 are stored locally on the mobile computing device 200. In variations, the response logs 226 are stored in a backend system accessible by the mobile computing device 200 over a network.

Thus, according to examples described herein, the processing resources 215 of the mobile computing device 200 can generate a set of control commands 216 based on the response action 228, and transmit the control commands 216 to the robotic device 250 in order to cause the robotic device 250 to perform the response action. As described herein, the response actions 228 may be preconfigured to correlate to the outputted content 244 using audio fingerprinting. Accordingly, the mobile computing device 200 can identify the exact time in the outputted content 244 (e.g., within a 2-3 second time window), determine a correlated response action 228, generate control commands 216 based on the response action 228, and transmit the control commands 216 to the robotic device 250 via the communications interface 205 to cause the robotic device 250 to execute the response action 228. As described herein, the response action 228 can be any set of actions, gestures, audio, or visual responses preconfigured to correlate to a particular point in time of the outputted content 244.

Example response actions 228 can include the robotic device 250 reacting to moments in a film, dancing to a particular song, providing conversational audio to the user that is relevant to a particular content segment, ask the user to perform one or more actions (e.g., hold the robotic device 250), and the like. In some examples, the robotic device 250 can correspond to a character in a film, and the response actions 228 can provide a viewer/user with additional entertainment to supplement a movie watching experience. For example, the response actions 228 can cause the robotic device 250 to respond to actions performed by the movie character in real time while the user watches the film. Thus, while watching the film with the robotic device 250 and mobile computing device 200 executing the audio response mode, the robotic device 250 can mimic the personality traits and characteristics of the movie character to which it corresponds.

### EXAMPLE ROBOTIC DEVICE

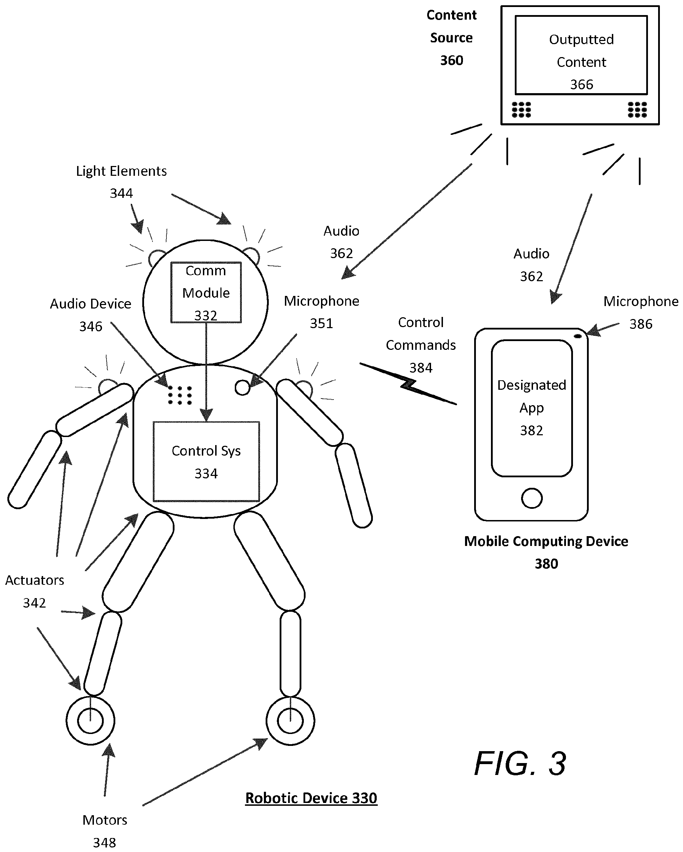

FIG. 3 is an illustration of an example robotic device, in accordance with examples described herein. The robotic device 330 can include a communications module 332 to communicate with a mobile computing device 380 to receive control commands 384. The control commands 384 can be processed by a control system 334 of the robotic device 330 to perform movements, maneuvers, or gestures, and output audio and/or visual responses. In one example, the robotic device 330 shown in FIG. 3 can comprise the various features of the robotic device 100 shown and described with respect to FIG. 1. Accordingly, the robotic device 330 can include a microphone 351 and execute an audio response mode to directly receive audio 362 from a content source 360. Based on the live audio 362, the control system 334 can analyze the audio signal to determine a point in time of the outputted content 366, determine a response action, and execute the response action by controlling any number of actuators 342, motors 348, light elements 344, and/or an audio device 346 of the robotic device 330, as described herein.

In variations, the robotic device 330 can be in communication with the mobile computing device 380, which can determine response actions based on the live audio 362 received via the microphone 386 of the mobile computing device 380. In such variations, the mobile computing device 380 can include the various features of the mobile computing device 200 shown and described in connection with FIG. 2. Accordingly, in executing the designated application 382 (e.g., which initiates the audio response mode), the mobile computing device 380 can determine audio responses based on the live audio 362 from the outputted content of the content sources 360, and generate control commands 384 that cause the robotic device 330 to perform the response actions. The mobile computing device 380 may then transmit the control commands 384 to the robotic device 330, and the control system 334 of the robotic device 330 can execute the control commands 384 on the light elements 344, audio device 346, actuators 342, and/or motors 348 to perform the response action.

### EXAMPLE SELF-PROPELLED DEVICE WITH MAGNETIC COUPLING

FIG. 4 is an illustration of an example robotic device in the form of a self-propelled device, according to examples described herein. In an example of FIG. 4, a self-propelled device 400 can include a magnetically coupled external accessory device 480. The self-propelled device 400 can include a spherical housing 457 which rolls on an underlying surface using an internal drive system 460. In variations, the housing 457 of the self-propelled device 400 can have an alternative rounded shape, such as an elliptical or cylindrical shape.

According to one aspect, the self-propelled device 400 can include a set of magnetic elements 458 and an internal support structure 425 to support the magnetic elements 458 in a desired orientation and position with respect to the underlying surface 402. By way of example, the support structure 425 can be implemented as part of a biasing mechanism that include a number of biasing elements 454, 456 that press against the inner surface of the spherical housing 457 to cause the wheels 418, 420 of the internal drive system 460 to continuously engage the inner surface of the spherical housing 457. The magnetic elements 458 can correspond to magnets, or any material (e.g., ferrous metals etc.) which is able to magnetically interact and couple with complementary magnets provided on the external accessory device 480. A carrier 430 (e.g., printed circuit board) can be included to provide mount point for various components of the self-propelled device 400, such as a controller 419, and antenna 418, and a microphone 435. The carrier 430 can also include a memory that stores logic, and can further include other hardware for controlling the drive system 460 of the self-propelled device 400.

The accessory device 480 can include a complementary magnetic elements 492 on or near a bottom region which makes contact with the spherical housing 457. In variations, the accessory device 480 can include a variety of shapes and orientations, depending on the implementation or purpose of the combined device. For example, in an implementation of FIG. 4, the accessory device 480 comprises a cylindrical or rectangular "hat" shape for the spherical housing 457. In many applications, the self-propelled device 400 operates as a toy or device for amusement, and the accessory device 480 is selectively shaped or structured to imitate human characteristics, or to provide other enhancements for furthering the amusement and appreciation of the combined device 400.

In one implementation, the magnetic elements 458, 492 of each of the self-propelled device 400 and the accessory device 430 are magnets oriented such that their opposing poles are directed towards each other to enable magnetic attraction and stability, and to prevent uncontrolled spinning of the accessory device 480. In variations, the magnetic elements 458, 492 of the self-propelled device 400 or the accessory device 480 include magnetically interactive materials, such as ferrous metals.

In various examples, an operational or use environment of the self-propelled device 400 can include events or conditions which disrupt the motion of the self-propelled device 400, such as (i) variations in the underlying surfaces (e.g., transition from smooth flooring to carpet flooring), (ii) collisions (e.g., with walls or other self-propelled devices), and (iii) relatively sharp velocity and acceleration of the self-propelled device 400, due to the self-propelled device 400 spinning or turning in any one of a variety of directions. Given the operational and use environment of the self-propelled device 400, the magnetic elements 458, 492 can maintain a strong, stable, and resilient magnetic coupling between the self-propelled device 400 and the accessory device 480 through the spherical housing 457.

Accordingly, in some examples, the quantity and/or distribution of magnetic elements (or magnetic material) 458 within the spherical housing 457 can be varied to increase stability and/or resiliency of the magnetic coupling. For example, while an example of FIG. 4 provides for the magnetic elements 458 to be positioned substantially in a polar region (relative to the underlying surface), in variations, the magnetic elements 458 can be replaced or augmented with multiple discrete magnetic elements that are positioned to promote strength, stability, or resiliency in the magnetic coupling. For example, discrete magnetic elements 458 can be positioned equidistantly (or otherwise) from the polar region 412, such as along a latitudinal plane between the equator and the polar region. The accessory device 480 can include one or more complementary magnetic elements 492 to enable the desired magnetic coupling.

Still further, a coupling surface of the accessory device 480 can include contours and features to reduce friction, at least when the self-propelled device 400 is in motion. The presence of friction can, for example, cause the spherical housing 457 and accessory device 480 to magnetically detach or destabilize the coupling between the two devices. To reduce friction, a contact portion 486 of the accessory device 480 can be rounded as a slider bearing, and an exterior surface of each of the spherical housing 457 and the accessory device 480 can be relatively smooth. Additionally, one or both of the of the spherical housing 457 and the contact portion 486 of the accessory device 480 can be formed from a material that reduces friction with other surfaces.

The accessory device 480 may exhibit a variety of differing shapes in a variety of different sizes. For example, the accessory device 480 may be dome-shaped or hemispherical. The accessory device 480 may further be shaped as a disc, a cuboid, a cylinder, or any number of other irregular shapes. Regardless of the shape or size, the accessory device 480 can include a number of magnets 492 to remain under magnetic interaction with the magnetic element 458 of the self-propelled device 400. Furthermore, the accessory device 480 may be interchangeable with various other accessory devices of differing shapes and sizes.

When the self-propelled device 400 moves, the external accessory device 480 can remain magnetically coupled to the self-propelled device 400. While the self-propelled device 500 is being maneuvered, the internal drive system 460 can pitch and rotate, which causes the external accessory device 480 to pitch and rotate as well.

To achieve continuous motion at a constant velocity for the self-propelled device 400, the displacement of the device's center of mass relative to its center of rotation can be maintained by action of wheels 418, 420 power by independent motors 422, 424. The displacement of the center of mass of the self-propelled device 400 relative to a center of rotation can be difficult to measure, and thus it can be difficult to obtain feedback for a closed-loop controller 419 to maintain constant velocity. However, the displacement can be proportional to the tilt angle (equal to polar angle 0) between the carrier 430 or support structure 425 and the surface on which self-propelled device 400 moves. The tilt angle can be sensed or estimated from a variety of sensor inputs. Therefore, as an example, the controller 419 for the self-propelled device 400 can be implemented to use the tilt angle between the carrier 430 or support structure 425 and the surface to regulate speed for the wheels 418, 420 causing the self-propelled device 400 to move at a constant speed. The controller 419 can determine the desired tilt angle to produce the desired speed, and the desired angle set-point is provided as an input to a closed loop controller regulating the drive mechanism.

In some implementations, the self-propelled device 400 can be under operative control by a controller device, such as the mobile computing device 200 shown and described with respect to FIG. 2. The internal drive system 460 of the self-propelled device 400 can generate momentum to pitch or tilt the support structure 425 based on the direction of acceleration, which can coincide with forward, reverse, rotational, or lateral acceleration. The magnetic interaction between external accessory 480 and the self-propelled device 400 can cause the external accessory 480 to roll or pitch along with the internal components as the self-propelled device 400 accelerates and maneuvers. In the example shown in FIG. 4, the self-propelled device 400 includes a pair of magnetic elements 458 where a first magnetic element may be oriented such that its south magnetic pole faces upwards, and a second magnetic element may be oriented such that its north magnetic pole faces upwards. Thus, the external accessory 480 can include a complementary pair of magnets 492 with a first magnetic element being oriented with its south magnetic pole facing downwards to magnetically attract the first magnetic element of the self-propelled device 400. A second magnetic element of the external accessory 480 can be oriented with its north magnetic pole facing downward to magnetically attract the second magnetic element of the self-propelled device 400. Various magnetic element arrangements are contemplated in which any number of magnetic elements (e.g., a magnetic array) can be included in the self-propelled device 400. For such arrangement, example external accessory devices 480 can include a complementary set or magnetic array with partnered magnets oriented in opposition to their associated magnets within the self-propelled device 400.

In some variations, a set of biasing elements 454, 456 can be provided to actively force the wheels 418, 420 against the inner surface of the spherical housing 457. In an example illustrated by FIG. 4, the biasing elements 454, 456 can comprise two or more separate and spring-loaded portal axles to actively force the drive system wheels 418, 420 against the inner surface. The biasing elements 454, 456 can include tips 655 that press against the inner surface with a force vector having a vertical value. The vertical force from the biasing elements 454, 456 pressing against the inner surface actively forces the drive system 460 and its respective wheels 418, 420 against the inner surface, thereby providing sufficient force for the drive system 460 to cause the self-propelled device 600 to move when the wheels 418, 420 are powered.

The independent biasing elements 454, 456 can be mounted directly onto the support structure 425 and may include torsion springs or other types of springs which instigate the force against the inner surface. As an addition or alternative, the biasing elements 454, 456 may be comprised of one or more of a compression spring, a clock spring, or a tension spring.

According to many examples, the self-propelled device 400 can include an inductive charge port 426 to enable inductive charging of a power source 416 used to provide power to the independent motors 422, 424 that power the wheels 418, 420. The self-propelled device 400 can further include a magnet holder 450 coupled to the support structure 425.

In some examples, the biasing elements 454, 456 are constantly engaged with the inner surface of the spherical housing 457. As such, the power from the motors 422, 424 is transferred directly to rotating the spherical housing 457. Thus, while motion of the self-propelled device 400 may be caused, at least partially, by pitching the internal components (and therefore the center of mass), motion may also be directly caused by active force of the wheels 418, 420 against the inner surface of the spherical housing 457 and direct transfer of electrical power from the motors 422, 424 to the wheels 418, 420. As such, the pitch of the support structure 425 may be substantially reduced, and remain substantially constant (e.g., substantially perpendicular to the external surface on which the self-propelled device 400 moves).

In some examples, the self-propelled device 400 may also include a tilt spring 477 that can couple the support structure 425 to the internal drive system 460, and provide dampening when, for example, the self-propelled device 400 experiences a collision event. This dampening can prevent the external accessory device 480 from detaching from the self-propelled device 400 during such events.

According to examples, the magnet holder can be a pivoting magnet holder 450, which can pivot a number of degrees (e.g., 10-20), or which can be set on a guide system to pivot a full 360 degrees. The pivoting magnet holder 450 can include the pair of magnets 458 such that as the pivoting magnet holder 450 pivots, the external accessory 480 pivots accordingly.

The pivoting magnet holder 450 can be controlled via a pivot actuator 452 which, based on a control command received from a controller device or generated by the controller 419 of the self-propelled device 400, can cause the pivoting magnet holder 450 to turn. Thus, a pivot command can be received via the antenna 418 and processed by the controller 419 in order to implement the command on the pivot actuator 452. Accordingly, control feature on the controller device, such as a user interface feature on a virtual steering mechanism, can be used to receive user input which causes the pivoting magnet holder 450 to turn, and thereby causes the external accessory to turn. The pivot actuator 452 can be controlled to turn clockwise or counterclockwise dynamically in response to such pivot commands. In variations, the entire internal drive system 460 can be rotated within the spherical housing 457 to cause the external accessory 480 to turn.

Additionally or alternatively, the self-propelled device 400 may be preprogrammed to cause the pivot actuator 452 to activate in response to certain events, such as in an audio response mode. For example, upon starting up, the self-propelled device 400 may be preprogrammed to detect a direction towards the controller device. Based on the direction of the controller, the internal drive system 460 can rotate the self-propelled device 400 in order calibrate a forward direction for the self-propelled device 400 in relation to the controller device. In addition, the pivot actuator 452 may be automatically enabled to turn the pivoting magnet holder 450 such that the external accessory faces the controller device.

Additionally or alternatively, the pivoting magnet holder 450 may have a default forward direction that coincides with a calibrated forward direction of the internal drive system 460. Thus, as the self-propelled device 400 is initially calibrated to the controls of the controller device, the pivot actuator 452 may be enabled to automatically calibrate a forward facing direction for the external accessory 480. Furthermore, the pivot actuator 452 may be automatically initiated during collision events or when another self-propelled device is detected within a predetermined distance. Further still, combinations of actions may be performed by the internal drive system 460 and the pivot actuator 452 as programmed actions or events.

As shown in FIG. 4, the tilt spring 477 can allow for an amount of shock absorption when the self-propelled device 400 experiences a collision event. The tilt spring 477 can further dampen an impact force experienced by the independent internal support structure 425, in order to lessen jolts, jerk events, and/or jounces experienced by the self-propelled device 400. Such events may increase the probability that the magnetic elements will decouple, causing the external accessory coupled to the self-propelled device 400 to detach. The tilt spring 477 can decrease the probability of such decoupling events.

According to examples described herein, the self-propelled device 400 may be placed on an inductive charging station 439 that can charge the power source 416 via the inductive charge port 426. In some examples, when the self-propelled device 400 is placed on the inductive charging station 439 the controller 419 can trigger a deep sleep mode. In other examples, in response to detecting the inductive charging, the controller 419 can execute the audio response mode as described herein to utilize the microphone 435 to listen for audio content and execute a corresponding response action accordingly. Thus, any of the various features of the self-propelled device 400 can be utilized to perform the response action. For example, the self-propelled device 400 can trigger the pivot actuator 452 to independently turn the external accessory 480, the internal drive system 460 to cause the external accessory 480 to shake or nod, or cause the self-propelled device 400 to perform a set of maneuvers, and audio device (not shown) to cause the self-propelled device 400 to make sounds or speak to the user, and/or a display device or lighting elements to provide visual responses to the outputted content. In variations, the self-propelled device 400 can receive the control commands from a mobile computing device executing the audio response mode, and implement the control commands on the various features described above.

### METHODOLOGY

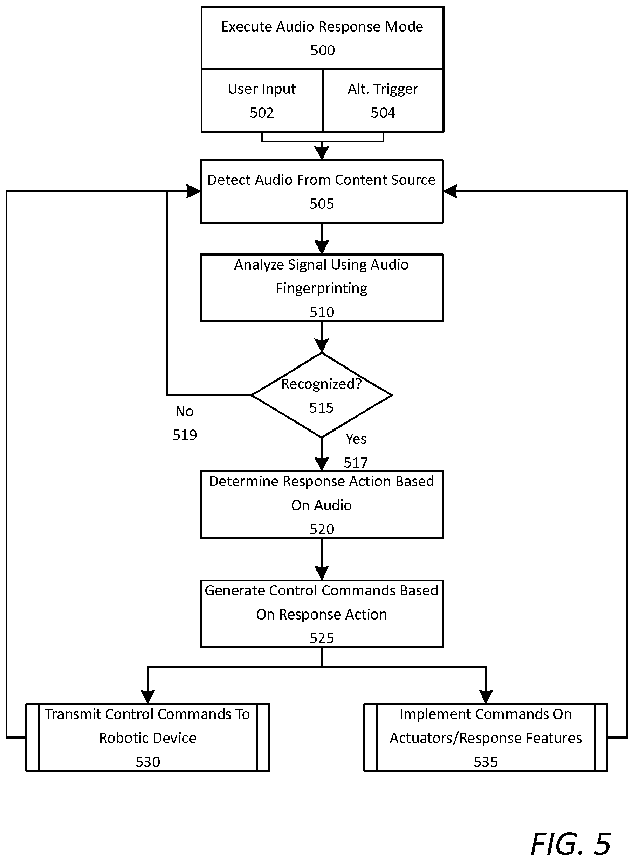

FIG. 5 is a flow chart describing an example method of analyzing audio to trigger a response, according to examples described herein. In the below description of FIG. 5, reference may be made to like reference characters representing various features of the robotic device 100 as shown and described with respect to FIG. 1, and the mobile computing device 200 as shown and described with respect to FIG. 2. Furthermore, the example methods as described in connection with FIG. 5 may be performed by the robotic device 100 of FIG. 2 or the mobile computing device of FIG. 2 (described hereinafter as "device 100, 200"). Referring to FIG. 5, the device 100, 200 can execute an audio response mode (500) in response to a user input (502) or an alternative trigger (504), such as the robotic device 100 being placed on an inductive charging station.

While in the audio response mode, the device 100, 200 can detect audio from a content source 150, 240 using a microphone 130, 225, such as a television or audio system (505). In many examples, the outputted content can be a movie or television shown being watched by a user. The device 100, 200 can then analyze the audio signal from the outputted content using audio fingerprinting (510). Based on the analysis, the device 100, 200 can determine whether the audio signal is recognized (515). For example, the device 100, 200 can compare the audio signal to fingerprinted audio signatures in a content library (e.g., stored locally or remotely access over a network). If the audio signal is not recognized (519), then the device 100, 200 can continue the detect audio from the content source (505), or alternatively terminate the audio response mode. However, if the audio signal is recognized by the device 100, 200 (517), then the device 100, 200 can determine a response action 147, 228 to be performed by the robotic device 100 based on the detected audio (520).

The response action 147, 228 may be identified in a response log 146, 226 that may be stored on the device 100, 200 or accessed remotely. Furthermore, the response action 147, 228 can be pre-correlated to the portion or segment of the outputted content form the content source. Based on the response action 147, 228 (e.g., a series of movements, sounds, or visuals), the device 100, 200 can then generate control commands 119, 216 to cause the robotic device 100 to execute the response action 147, 228 (525). For mobile computing device 200 implementations, the mobile computing device 200 may then transmit the generated commands 216 to the robotic device 100 for execution (530). For standalone robotic device 100 implementations, the robotic device 100 can then execute the generated commands 119 to perform the response action 147, 228 (535). Thereafter, the process can continue to repeat throughout the remainder of the outputted content (e.g., movie), or until the audio response mode is terminated.

Aspects of the present disclosure, for example, are described above with reference to block diagrams and/or operational illustrations of methods, systems, and computer program products according to aspects of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

The description and illustration of one or more aspects provided in this application are not intended to limit or restrict the scope of the disclosure as claimed in any way. The aspects, examples, and details provided in this application are considered sufficient to convey possession and enable others to make and use the best mode of claimed disclosure. The claimed disclosure should not be construed as being limited to any aspect, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate aspects falling within the spirit of the broader aspects of the general inventive concept embodied in this application that do not depart from the broader scope of the claimed disclosure.

## Claims

1. A mobile computing device comprising:
a microphone;
one or more processors; and
one or more memory resources storing instructions that, when executed by the one or more processors, causes the mobile computing device to:
using the microphone, detect audio content from a content source;
analyze the audio content to determine that the audio content corresponds to a respective portion of a stored content file;
identify a response action correlated to the respective portion;
generate control commands to cause a robotic device to perform the response action; and
transmit the control commands to the robotic device for execution.

2. The mobile computing device of claim 1, wherein analyzing the audio content comprises comparing the audio content to one or more stored audio fingerprints.

3. The mobile computing device of claim 2, wherein the one or more stored audio fingerprints are associated with information about the audio input, wherein the information about the audio input comprises one or more of:
a song name;
a film name; and
a particular scene in a film.

4. The mobile computing device of claim 2 or 3, wherein identifying a response action comprises:
identifying an audio signature corresponding to a particular segment of audio content associated with the audio content; or
performing a lookup in at least one response log to determine a response action, wherein the lookup is performed by comparing the audio content to a plurality of audio signatures stored in the at least one response log.

5. The mobile computing device of claim 4, wherein the response log is stored on the mobile computing device; or
wherein the response log is stored on a remote computing device, and wherein the mobile computing device communicates with the remote computing device via a network.

6. The mobile computing device of any one of claims 1 to 5, wherein the content source comprises at least one of:
a television;
a gaming system; and
an audio system.

7. A robotic device comprising:
a plurality of actuators operable on a number of controllable features;
a microphone;
one or more processors; and
one or more memory resources storing instructions that, when executed by the one or more processors, causes the mobile computing device to:
using the microphone, detect audio content from a content source;
analyze the audio content to determine that the audio content corresponds to a respective portion of a stored content file;
identify a response action correlated to the respective portion;
generate control commands to cause a robotic device to perform the response action; and
execute the control commands on the plurality of actuators to perform the response action.

8. The robotic device of claim 7, wherein the control commands are generated based at least upon the response action; and/or
wherein the response action comprises at least one of:
performing gesture;
playing an audio response;
displaying a visual response;
dancing to a song; and
providing conversational audio.

9. The robotic device of claim 7 or 8, wherein analyzing the audio content comprises comparing the audio content to one or more stored audio fingerprints.

10. The robotic device of claim 9, wherein identifying a response action further comprises performing a lookup in at least one response log to determine a response action, wherein the lookup is performed by comparing the audio content to a plurality of audio signatures stored in the at least one response log.

11. The robotic device of claim 10, wherein the response log is stored on the robotic device; or wherein the response log is stored on a remote computing device, and wherein the robotic device communicates with the remote computing device.

12. A method comprising:
detecting audio content from a content source;
analyze the audio content to determine that the audio content corresponds to a respective portion of a stored content file;
identify a response action correlated to the respective portion;
generate control commands to cause a robotic device to perform the response action; and
transmit the control commands to the robotic device for execution.

13. The method of claim 12, wherein analyzing the audio content comprises comparing the audio content to one or more stored audio fingerprints.

14. The method of claim 13, wherein the one or more stored audio fingerprints are associated with information about the audio input, wherein the information about the audio input comprises one or more of:
a song name;
a film name; and
a particular scene.

15. The method of any one of claims 12 to 14, wherein identifying a response action comprises identifying an audio signature corresponding to a particular segment of audio content associated with the audio content; or wherein identifying a response action further comprises performing a lookup in at least one response log to determine a response action, wherein the lookup is performed by comparing the audio content to a plurality of audio signatures stored in the at least one response log.
